**Europäisches Patentamt**

**European Patent Office**

**Office européen des brevets**

(11) Publication number : **0 412 451 B1**

# (12) EUROPEAN PATENT SPECIFICATION

(45) Date of publication of patent specification :
30.09.92 Bulletin 92/40

(51) Int. Cl.⁵ : **A01B 59/043**

(21) Application number : **90114947.6**

(22) Date of filing : **03.08.90**

(54) **A hitch for coupling equipment or implements to an agricultural tractor or the like.**

(30) Priority : **11.08.89 IT 6770089**

(43) Date of publication of application :
**13.02.91 Bulletin 91/07**

(45) Publication of the grant of the patent :
**30.09.92 Bulletin 92/40**

(84) Designated Contracting States :
**AT CH DE ES FR GB LI**

(56) References cited :
**EP-A- 0 172 528**
**EP-A- 0 187 733**
**DE-A- 3 527 774**

(73) Proprietor : **SAME S.p.A.**
**Viale F. Cassani, 14**
**I-20047 Treviglio Bergamo (IT)**

(72) Inventor : **Rivoltella, Martino**
**Via Bramante 3**
**I-24047 Treviglio, Bergamo (IT)**

(74) Representative : **Buzzi, Franco et al**
**c/o Jacobacci-Casetta & Perani S.p.A. Via**
**Alfieri, 17**
**I-10121 Torino (IT)**

Jouve, 18, rue Saint-Denis, 75001 PARIS

## Description

The present invention relates to hitches for coupling agricultural equipment or implements to agricultural, industrial or garden tractors.

In particular, the invention relates to a hitch of the type comprising a body defining a substantially hemispherical seat for housing a ball coupling member carried by a piece of equipment or an implement and a closure member which is movable between an advanced position in which it retains the ball coupling member in the hemispherical seat and a retracted release position in which it enables the ball coupling member to be released from the hemispherical seat, and means for the remote control of the closure member, as is known in accordance with the prior art portion of claim 1 (see DE-A-3527774).

The object of the present invention is to provide a hitch of the type defined above which is simple and cheap to produce, is functionally efficient, and is more reliable in use.

According to the invention, this object is achieved by virtue of the fact that the closure member is constituted by a rod arranged substantially radially to the hemispherical seat and associated with the piston of a pressurised-fluid jack which is connected to a supply from the tractor and normally tends to keep the rod in the advanced position against the action of means which urge the rod towards its retracted position, the rod being hollow and having an auxiliary, manually-operable retaining member which can be moved axially through the hollow rod between a retracted, inoperative position and an advanced position in which it keeps the rod in the advanced locking position, even when the pressurised-fluid jack is de-activated.

The jack conveniently is a single-acting hydraulic jack.

The invention will now be described in detail with reference to the appended drawings, provided purely by way of non-limiting example, in which:

Figure 1 shows schematically, a hooked end according to the invention in partial, longitudinal section, and

Figure 2 is a variant of Figure 1.

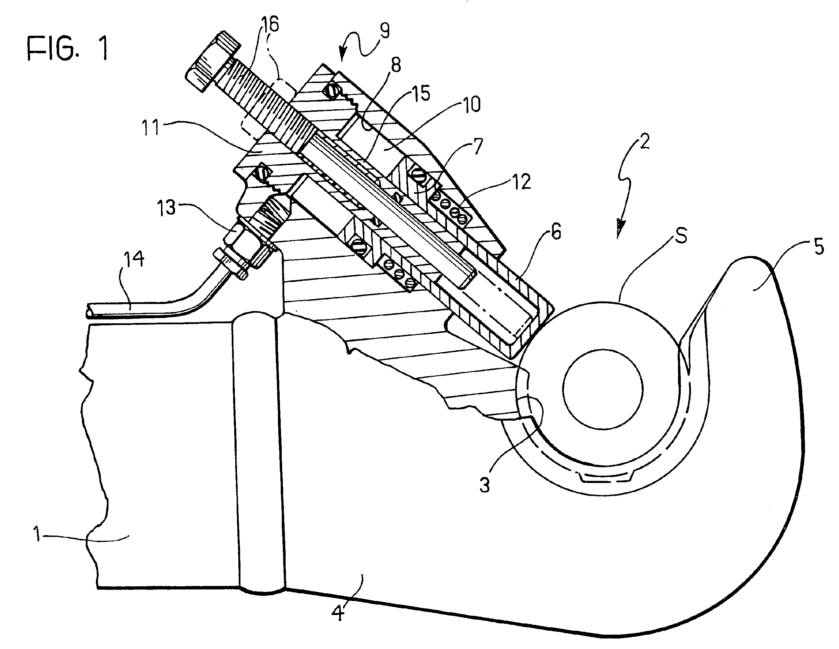

With reference to Figure 1, an arm 1 of a three-point tractor linkage has a hitch 2 according to the invention fixed rigidly to its free end for receiving, in a conventional manner, a ball coupling member carried by a bar or by an agricultural implement which is to be connected to the three-point linkage.

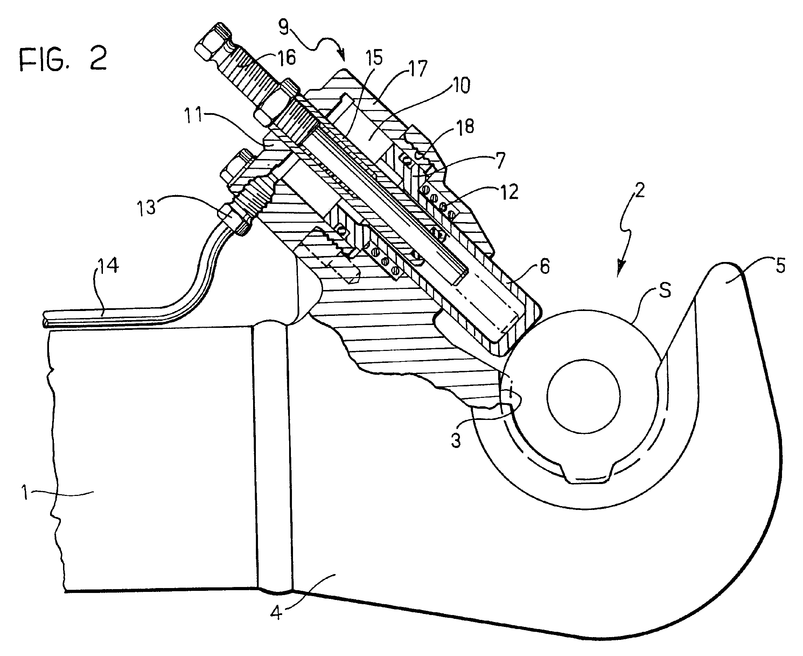

The ball coupling member is shown in broken outline at S in Figure 2 in the configuration in which it is engaged in the hitch 2.

The hitch 2 is formed with an upwardly-open, substantially hemispherical seat 3 interposed between a terminal piece 4, which is connected to the arm 1, and a tooth-shaped end part 5.

A closure member, indicated 6, is associated with the hemispherical seat 3 and has the function of retaining the ball coupling member S therein in its configuration of engagement with the hitch 2.

The closure member 6 is constituted by a rod arranged substantially radially to the hemispherical seat 3 and fixed to a piston 7 which is sealingly slidable in a cylinder 8 formed on top of the terminal piece 4 of the hitch 2.

The cylinder 8 and the piston 7 with the rod 6 define a single-acting hydraulic jack 9 whose thrust chamber 10, which the upper end of the piston 7 faces, is closed at the top by a plug 11 fitted sealingly in the top of the cylinder 8.

A helical compression spring, indicated 12, acts on the opposite face of the piston 7 to the thrust chamber 10.

The thrust chamber 10 is connected by means of a connector 13 and a pipe 14 to a hydraulic supply installed in the tractor. The supply of pressurised hydraulic fluid to the chamber 10, and therefore the operation of the jack 9, is effected by means of a conventional three-way distributor (not shown) operable from the driving position of the tractor in the manner clarified below. The plug 11 is hollow and has an axial tubular guide shank 15 along which the rod 6, which is also tubular, is axially movable. The plug 11 and its guide appendage 15 are at least partially internally threaded for engagement by a threaded rod 16 which constitutes an auxiliary member operable manually in the manner explained below.

In use, the thrust chamber 10 is normally supplied with pressurised hydraulic fluid from the tractor supply so that the piston 7 and the rod 6 are normally kept in the advanced position shown in the drawing, against the action of the return spring 12. In this position, the rod 6 retains the ball coupling member S in the hemispherical seat 3 in the configuration in which it is engaged in the hitch 2. The auxiliary retaining rod 16 is normally kept in the unscrewed position shown in continuous outline in the drawing so as not to interfere with the end of the rod 6 at all.

In order to enable the ball coupling member S to be removed from the seat 3, or to be inserted therein, the thrust chamber 10 of the jack 9 is connected to exhaust so as to enable the piston 7 and the rod 6 to be retracted by the action of the spring 12, the rod 6 thus moving radially away from the hemispherical seat 3.

In order to position the rod 6 or keep it in its advanced position in which it retains the ball member S even in the absence of pressure in the chamber 10, that is, even when the jack 9 is de-activated or has broken down, it suffices for the threaded rod 16 to be screwed in manually so that it advances axially to the position shown in broken outline in the drawing. This advance obviously causes a corresponding advance of the rod 6 to the locking position and its subsequent return to the retracted position is then achieved by the simple unscrewing of the threaded rod 16 again.

In the variant shown in Figure 2 (in which parts identical or similar to those described above are indicated by the same reference numerals), the cylinder of the jack 9 is constituted by a body 17 separate from the terminal piece 4 and inserted in a suitable seat 18 thereof.

## Claims

1. A hitch (2) for coupling equipment and implements to an agricultural, industrial or garden tractor, comprising a body defining a substantially hemispherical seat (3) for receiving a ball coupling member (5) carried by a piece of equipment or an implement, and a closure member (6) which is movable between an advanced position in which it retains the ball coupling member (5) in the hemispherical seat (3) and a retracted release position in which it enables the ball coupling member (5) to be released from the hemispherical seat (3), and means for the remote control of the closure member comprising a pressurised fluid jack (9) connected to a supply of the tractor, characterised in that the closure member is constituted by a rod (6) arranged substantially radially of the hemispherical seat (3) and associated with the piston (7) of said pressurised-fluid jack (9) which normally tends to keep the rod (6) in the advanced position against the action of means (12) which urge the rod (6) towards its retracted position, and in that the rod (6) is hollow and an auxiliary, manually-operable retaining member (16) is provided which is movable axially through the hollow rod (6) between a retracted, inoperative position and an advanced position in which it keeps the rod (6) in the advanced, locking position even when the pressurised-fluid jack (9) is de-activated.

2. A hitch according to Claim 1, characterised in that the jack is a single-acting hydraulic jack (9).

3. A hitch according to Claim 2 comprising a terminal piece (4), characterised in that the cylinder (8) of the jack (9) is formed in the terminal piece (4) itself.

4. A hitch according to Claim 2 comprising a terminal piece (4), characterised in that the cylinder (17) of the jack is constituted by a body separate from the terminal piece (4).

## Patentansprüche

1. Schnellkupplung (2), um ein Gerät oder Werkzeuge mit einem landwirtschaftlichen, industriellen oder Gartentraktor zu kuppeln, wobei die Schnellkupplung einen Körper, der einen im wesentlichen halbkugelförmigen Sitz (3) bildet, um ein kugelförmiges Kupplungselement (S) aufzunehmen, das von einem Teil eines Geräts oder eines Werkzeugs getragen wird, ein Schließelement (6), das zwischen einer vorgeschobenen Stellung, in der es das kugelförmige Kupplungselement (S) im halbkugelförmigen Sitz (3) zurückhält, und einer zurückgezogenen Freigabestellung bewegbar ist, in der es eine Freigabe des kugelförmigen Kupplungselements (S) aus dem halbkugelförmigen Sitz (3) ermöglicht, sowie eine Einrichtung für die Fernsteuerung des Schließelements besitzt, das eine Druckfluidpresse (9) enthält, die mit einer Versorgung des Traktors verbunden ist, dadurch gekennzeichnet, daß das Schließelement von einer Stange (6) gebildet wird, die im wesentlich radial zum halbkugelförmigen Sitz (3) angeordnet und dem Kolben (7) der Druckfluidpresse (9) zugeordnet ist, die normalerweise die Stange (6) in der vorgeschobenen Stellung gegen die Wirkung einer Einrichtung (12) zu halten versucht, die die Stange (6) zu ihrer zurückgezogenen Stellung drückt, und daß die Stange (6) hohl ist, wobei ein zusätzliches, händisch betätigbares Rückhalteelement (16) vorgesehen ist, das axial durch die hohle Stange (6) zwischen einer zurückgezogenen Ruhestellung und einer vorgeschobenen Stellung bewegbar ist, in der es die Stange (6) auch dann in der vorgeschobenen Verriegelungsstellung hält, wenn die Hydraulikfluidpresse (9) deaktiviert ist.

2. Schnellkupplung gemäß Anspruch 1, dadurch gekennzeichnet, daß die Presse eine einfachwirkende Hydraulikpresse (9) ist.

3. Schnellkupplung gemäß Anspruch 2 mit einem Endstück (4), dadurch gekennzeichnet, daß der Zylinder (8) der Presse (9) im Endstück (4) selbst ausgebildet ist.

4. Schnellkupplung gemäß Anspruch 2 mit einem Endstück (4), dadurch gekennzeichnet, daß der Zylinder (17) der Presse von einem Körper gebildet wird, der vom Endstück (4) getrennt ist.

## Revendications

1- Crochet d'attelage (2) pour atteler un appareil et des accessoires à un tracteur agricole, industriel ou de jardin, comprenant: un corps délimitant un siège à peu près hémisphérique (3) apte à recevoir une rotule d'attelage (S) portée par une pièce d'un appareil ou d'un accessoire, et un organe de fermeture (6) qui est mobile entre une position avancée dans laquelle il retient la rotule d'attelage (S) dans le siège hémisphérique (3), et une position rétractée, de libération, dans laquelle il permet à la rotule (S) d'être libérée du siège hémisphérique (3), et des moyens de commande à distance de l'organe de fermeture, comprenant un vérin (9) à fluide sous pression relié à une source d'alimentation du tracteur, caractérisé en ce que l'organe de fermeture est constitué par une tige (6) disposée à peu près radialement par rapport au siège hémisphérique (3) et associée au piston (7) dudit vérin (9) à fluide sous pression, qui tend normalement à maintenir la tige (6) dans la position avancée à l'encontre de l'action de moyens (12) qui forcent la tige (6) vers sa position rétractée, en ce que la tige (6) est creuse et en ce qu'il est prévu un organe de retenue auxiliaire (16) pouvant être actionné manuellement, qui est mobile axialement à travers la tige creuse (6) entre une position rétractée, inactive, et une position avancée dans laquelle il maintient la tige (6) dans la position avancée de verrouillage même lorsque le vérin (9) à fluide sous pression n'est pas actionné.

2- Crochet d'attelage suivant la revendication 1, caractérisé en ce que le vérin est un vérin hydraulique (9) à simple effet.

3- Crochet d'attelage suivant la revendication 2, comprenant une pièce terminale (4), caractérisé en ce que le cylindre (8) du vérin (9) est formé dans la pièce terminale (4) elle-même.

4- Crochet d'attelage suivant la revendication 2, comprenant une pièce terminale (4), caractérisé en ce que le cylindre (17) du vérin est constitué par un corps séparé de la pièce terminale (4).

FIG. 1

EP 0 412 451 B1

FIG. 2